# EUROPEAN PATENT APPLICATION

(11) **EP 4 303 963 A1**
(43) Date of publication of application: **10.01.2024**
(21) Application number: 22912787.3
(22) Date of filing: 11.05.2022
(51) Int. Cl.: H01M 4/62, H01M 4/66, H01M 4/134, H01M 4/1395, H01M 10/052

(54) **SECONDARY BATTERY, BATTERY MODULE, BATTERY PACK, AND ELECTRICAL DEVICE**

(71) Applicant: Contemporary Amperex Technology Co., Limited, Ningde City, Fujian 352100 (CN)
(72) Inventor: WU, Lili, Ningde City, Fujian 352100 (CN); SONG, Peidong, Ningde City, Fujian 352100 (CN); SUN, Xin, Ningde City, Fujian 352100 (CN); YUN, Liang, Ningde City, Fujian 352100 (CN); CHEN, Xingbu, Ningde City, Fujian 352100 (CN); DONG, Miaomiao, Ningde City, Fujian 352100 (CN); LI, Xuan, Ningde City, Fujian 352100 (CN)
(74) Representative: von Tietzen und Hennig, Nikolaus
(86) International application number: PCT/CN2022/092221
(87) International publication number: WO 2023/216142

(57) **Abstract**

This application provides a secondary battery (5), a battery module (4), a battery pack (1), and an electric apparatus. In the secondary battery (5), a negative electrode active material layer (62) of a negative electrode plate (6) includes a porous carbon material; the negative electrode active material layer (62) has a pore (63), the pore (63) running through or not through the negative electrode active material layer (62); and lithium metal (64) is present in the pore (63).

## Description

### TECHNICAL FIELD

This application relates to the field of secondary batteries and specifically to a secondary battery, a battery module, a battery pack, and an electric apparatus.

### BACKGROUND

Secondary batteries with lithium metal negative electrode systems have high energy density because the negative electrode contains elemental lithium metal; however, lithium metal is prone to produce dendrites and prone to interface side reactions during deposition, thus resulting in poor cycling stability and short cycle life.

### SUMMARY

In view of the foregoing problem, this application provides a secondary battery, a battery module, a battery pack, and an electric apparatus, featuring high energy density and long cycle life.

According to a first aspect, this application provides a secondary battery including a negative electrode plate, where
a negative electrode active material layer of the negative electrode plate includes a porous carbon material; the negative electrode active material layer has a pore, the pore running through or not through the negative electrode active material layer; and lithium metal is present in the pore.

In the secondary battery, the negative electrode active material layer has the pore, and the lithium metal is present in the pore. As compared with a conventional negative electrode plate for which lithium metal is deposited on a surface of the negative electrode plate, due to the presence of the lithium metal in the pore, side reactions of the lithium metal at an interface between the negative electrode plate and an electrolyte can be reduced, thus reducing loss of a lithium source, and allowing higher energy density and longer cycle life of the secondary battery.

In some embodiments, the secondary battery further includes a positive electrode plate; and a ratio of a reversible lithiation capacity of the negative electrode plate to a reversible delithiation capacity of the positive electrode plate is CB, where 0 < CB ≤ 1, and
optionally, 0.4 ≤ CB ≤ 1.

In some embodiments, thickness of the negative electrode active material layer is x, and distance between two end openings of the pore in a direction perpendicular to the negative electrode active material layer is y, where x and y satisfy the following condition: 0.1x ≤ y ≤ x.

In some embodiments, length between two end openings of the pore along an inner wall of the pore is L, where L and y satisfy the following condition: L > y.

In some embodiments, the pore is a non-linear pore.

In some embodiments, a projection of interior of the pore on the current collector in the direction perpendicular to the negative electrode active material layer does not overlap with two end openings of the pore.

In some embodiments, the pore is provided in plurality, and distance between adjacent two of the pores is d, where d ≤ 10x.

In some embodiments, a maximum diameter of the pore is 1 µm-50 µm.

In some embodiments, the porous carbon material is selected from at least one of hard carbon, biomass carbon, activated carbon, carbon fibers, and carbon aerogel.

In some embodiments, Dᵥ50 of the porous carbon material is 1 µm-100 µm.

In some embodiments, a specific surface area of the porous carbon material in a carbon dioxide atmosphere is greater than or equal to 50 m²/g.

In some embodiments, an oil absorption value of the porous carbon material is greater than or equal to 30 mL/100g, where the oil absorption value is determined using the Gardner-Coleman method.

In some embodiments, a ratio of a specific surface area of the negative electrode plate in a carbon dioxide atmosphere to a specific surface area of the negative electrode plate in a nitrogen atmosphere is greater than or equal to 5.

In some embodiments, in the negative electrode active material layer, a mass percentage of the porous carbon material is 90%-98%.

In some embodiments, a current collector of the negative electrode plate is copper foil, the copper foil containing at least one element for lithiation.

In some embodiments, a mass percentage of the element for lithiation in the copper foil is greater than or equal to 5%.

In some embodiments, the element for lithiation includes at least one of silver, zinc, magnesium, aluminum, tin, and silicon.

In some embodiments, thickness of the copper foil is 4 µm-20 µm.

In some embodiments, a method for preparing the negative electrode plate includes the following steps:
pretreating the porous carbon material so that the porous carbon material adsorbs gas;
preparing a negative electrode slurry from the porous carbon material with the gas adsorbed; and
preparing the negative electrode active material layer by using the negative electrode slurry on at least one surface of the current collector, the gas being desorbed from the porous carbon material to form the pore.

According to a second aspect, this application provides a battery module including the foregoing secondary battery.

According to a third aspect, this application provides a battery pack including the foregoing battery module.

According to a fourth aspect, this application provides an electric apparatus including at least one of the foregoing secondary battery, battery module, and battery pack.

Details of one or more embodiments of this application are presented in the following accompanying drawings and descriptions, and other features, objectives, and advantages of this application become apparent from the specification, accompanying drawings, and claims.

### BRIEF DESCRIPTION OF DRAWINGS

FIG. 1 is a schematic structural diagram of a negative electrode plate of a secondary battery according to an embodiment of this application;
FIG. 2 is a schematic diagram of a secondary battery according to an embodiment of this application;
FIG. 3 is an exploded view of the secondary battery according to the embodiment of this application in FIG. 2;
FIG. 4 is a schematic diagram of a battery module according to an embodiment of this application;
FIG. 5 is a schematic diagram of a battery pack according to an embodiment of this application;
FIG. 6 is an exploded view of the battery pack according to the embodiment of this application in FIG. 5; and
FIG. 7 is a schematic diagram of an electric apparatus using a secondary battery in an embodiment of this application as a power source.

Reference signs: 1. battery pack; 2. upper box body; 3. lower box body; 4. battery module; 5. secondary battery; 51. housing; 52. electrode assembly; 53. cover plate; 6. negative electrode plate; 61. current collector; 62. negative electrode active material layer; 63. pore; and 64. lithium metal.

To better describe and illustrate the embodiments and/or examples of those inventions disclosed herein, reference may be made to one or more accompanying drawings. The additional details or examples used to describe the accompanying drawings should not be considered as any limitations on the scope of any of the disclosed inventions, the embodiments and/or examples currently described, and the best mode of these inventions as currently understood.

### DESCRIPTION OF EMBODIMENTS

For ease of understanding this application, this application is described more comprehensively below with reference to the related accompanying drawings. The accompanying drawings show preferred embodiments of this application. However, this application may be implemented in many different manners and is not limited to the embodiments described herein. Conversely, these embodiments are provided for a more thorough and comprehensive understanding of the disclosed content of this application.

Unless otherwise defined, all technical and scientific terms used herein shall have the same meanings as commonly understood by those skilled in the art to which this application pertains. The terms used herein in the specification of this application are for description of specific embodiments only without any intention to limit this application. The term "and/or" used herein includes any and all combinations of one or more associated items listed.

Secondary batteries with lithium metal negative electrode systems have high energy density because the negative electrode contains elemental lithium metal; however, lithium metal is prone to produce dendrites and prone to interface side reactions during deposition, thus resulting in poor cycling stability and short cycle life. For a conventional lithium metal negative electrode plate, lithium metal is usually deposited on a surface of the electrode plate and is prone to produce dendrites during deposition, and the lithium metal deposited on the surface of the electrode plate is prone to side reactions with an electrolyte of a secondary battery, thus leading to degradation of energy density and cycling performance of the secondary battery.

To solve the foregoing problems, this application provides a secondary battery and a battery module, battery pack, and electric apparatus using such secondary battery. Such secondary battery is applicable to various apparatuses that use batteries, for example, mobile phones, portable devices, notebook computers, electric bicycles, electric toys, electric tools, electric vehicles, ships, and spacecrafts. For example, spacecrafts include airplanes, rockets, space shuttles, and spaceships.

The following describes a secondary battery, a battery module, a battery pack, and an electric apparatus in this application with appropriate reference to the accompanying drawings.

An embodiment of this application provides a secondary battery.

Typically, the secondary battery includes a positive electrode plate, a negative electrode plate, an electrolyte, and a separator. In a charge and discharge process of the battery, active ions intercalate and deintercalate between the positive electrode plate and the negative electrode plate. The electrolyte conducts ions between the positive electrode plate and the negative electrode plate. The separator is disposed between the positive electrode plate and the negative electrode plate to mainly prevent a short circuit between positive and negative electrodes and to allow the ions to pass through.

Negative electrode plate

The negative electrode plate includes a negative electrode current collector and a negative electrode active material layer disposed on at least one surface of the negative electrode current collector. For example, the negative electrode current collector includes two opposite surfaces in its thickness direction, and the negative electrode active material layer is disposed on either or both of the two opposite surfaces of the negative electrode current collector.

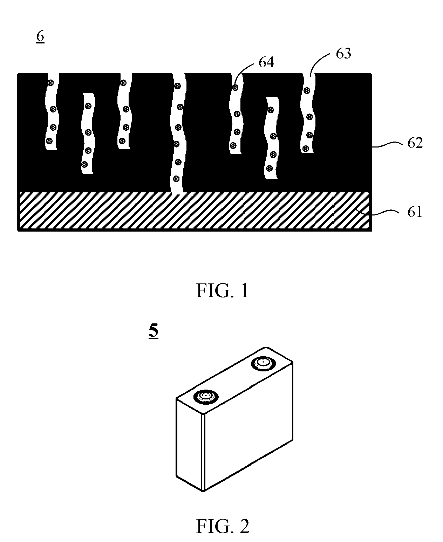

In this embodiment of this application, the negative electrode active material layer of the negative electrode plate includes a porous carbon material. Referring to FIG. 1, FIG. 1 is a schematic structural diagram of a negative electrode plate 6 of a secondary battery according to an embodiment of this application. The negative electrode plate 6 includes a current collector 61 and a negative electrode active material layer 62. The negative electrode active material layer 62 has a pore 63, the pore 63 running through or not through the negative electrode active material layer 62; and lithium metal 64 is present in the pore 63.

In the secondary battery, the negative electrode active material layer has the pore, and the lithium metal is present in the pore. As compared with a conventional negative electrode plate for which lithium metal is deposited on a surface of the negative electrode plate, due to the presence of the lithium metal in the pore, side reactions of the lithium metal at an interface between the negative electrode plate and an electrolyte can be reduced, thus reducing loss of a lithium source, and allowing higher energy density and longer cycle life of the secondary battery.

In some embodiments, a ratio of a reversible lithiation capacity of the negative electrode plate to a reversible delithiation capacity of a positive electrode plate is CB, where 0 < CB ≤ 1. The reversible lithiation capacity of the negative electrode plate is related to a gram capacity of a negative electrode active material (the porous carbon material in this application) and a coating weight of the negative electrode plate. The reversible delithiation capacity of the positive electrode plate is related to a gram capacity of a positive electrode active material and a coating weight of the positive electrode plate. Therefore, controlling the gram capacity of the active material and the coating weight of the positive/negative electrode plate can adjust the CB value of the secondary battery. Controlling the CB value of the secondary battery can ensure that during charging, in addition to lithium carbon alloy (LiC₆) formed on the negative electrode plate of the secondary battery, lithium metal is also deposited in the pore, and that the energy density of the secondary battery is high. In addition, the lithium carbon alloy (LiC₆) of the negative electrode plate and the lithium metal in the pore can coordinate to further improve kinetic performance and cycling stability of the secondary battery. Typically, during discharging, lithium ions deintercalation occurs first in the lithium metal and then in LiCe. For the negative electrode plate, lithium is deposited in the pore of the negative electrode plate, so less lithium is deposited on the surface of the negative electrode plate. During discharging, under a certain overpotential, lithium ions can deintercalate from LiC₆ first, and then lithium metal intercalate into C to replenish capacity released by LiC₆, thereby improving the cycling performance. Further, 0.4 ≤ CB ≤ 1. Controlling 0.4 ≤ CB ≤ 1 can allow more lithium metal to be deposited in the pore of the negative electrode plate, increasing the energy density of the secondary battery.

It can be understood that before initial charge of the secondary battery, no lithium metal is deposited in the pore of the negative electrode plate, and controlling the CB value of the secondary battery can allow lithium metal to be deposited in the pore of the negative electrode plate after the initial charge of the secondary battery, thus increasing the energy density of the secondary battery.

In some embodiments, thickness of the negative electrode active material layer is x, and distance between two end openings of the pore in a direction perpendicular to the negative electrode active material layer is y, where x and y satisfy the following condition: 0.1x ≤ y ≤ x.

In some embodiments, length between two end openings of the pore along an inner wall of the pore is L, where L and y satisfy the following condition: L > y. It can be understood that the distance between the two end openings of the pore may not be perpendicular to the surface of the negative electrode active material layer, or the pore is non-linear and tortuous.

In some embodiments, the pore is a non-linear pore. The non-linear pore can have a longer transmission path and increase a specific surface area of the negative electrode plate, thereby further improving the cycle life of the secondary battery.

In some embodiments, any projection of interior of the pore on the current collector in the direction perpendicular to the negative electrode active material layer does not overlap with two end openings of the pore. The projection of the interior of the pore on the current collector in the direction perpendicular to the negative electrode active material layer does not completely overlap with the two end openings of the pore, that is, the pore is tortuous. Therefore, the negative electrode plate has a longer transmission path and a larger specific surface area.

In some embodiments, the pore is provided in plurality, and distance between adjacent two of the pores is d, where d ≤ 10x. The pores of the negative electrode plate are distributed within a density range satisfying d ≤ 10x, which can ensure that the negative electrode plate has a large quantity of pores, thereby guaranteeing deposition of lithium metal and improving the energy density and cycle life of the secondary battery.

In some embodiments, a maximum diameter of the pore is 1 µm-50 µm. The maximum diameter of the pore is a major axis diameter of the pore on the surface of the electrode plate. The maximum diameter of the pore of the negative electrode plate falling within the above range facilitates deposition of lithium metal, thereby improving the energy density and cycle life of the secondary battery. Optionally, the maximum diameter of the pore is 1 µm-10 µm, 10 µm-20 µm, 20 µm-30 µm, 30 µm-40 µm, or 40 µm-50 µm.

In some embodiments, the porous carbon material is selected from at least one of hard carbon, biomass carbon, activated carbon, carbon fibers, and carbon aerogel. When applied to the negative electrode plate, the porous carbon material having a large specific surface area can improve porosity of the negative electrode plate. Moreover, when gas adsorbed in pores of the porous carbon material is desorbed, the pore structure of the negative electrode plate can be formed.

In some embodiments, Dᵥ50 of the porous carbon material is 1 µm-100 µm. Dᵥ50 refers to a particle size corresponding to 50% in volume distribution. For example, Dᵥ50 may be easily determined in accordance with a particle size distribution laser diffraction method in GB/T 19077-2016 by using a laser particle size analyzer, for example, a laser particle size analyzer of Mastersizer 2000E from Malvern Instruments Ltd. of UK. Optionally, Dᵥ50 of the porous carbon material is 1 µm, 2 µm, 4 µm, 5 µm, 8 µm, 10 µm, 20 µm, 30 µm, 40 µm, 50 µm, 60 µm, 70 µm, 80 µm, 90 µm, or 100 µm. Further, Dᵥ50 of the porous carbon material is 4.6 µm.

In some embodiments, a specific surface area of the porous carbon material in a carbon dioxide atmosphere is greater than or equal to 50 m²/g. The porous carbon material has a large specific surface area and therefore can adsorb gas, enabling the negative electrode plate to produce abundant pore structures during preparation, thereby facilitating deposition of lithium metal in the pores.

In some embodiments, an oil absorption value of the porous carbon material is greater than or equal to 30 mL/100g, where the oil absorption value is determined using the Gardner-Coleman method, and a solvent used includes any one of dibutyl phthalate (DBP), dioctyl phthalate (DOP), linseed oil, deionized water, N-methylpyrrolidone, absolute ethanol, and acetone. The oil absorption value of the porous carbon material falling within the above range facilitates release of the gas adsorbed by the porous carbon material for formation of the pore structure of the negative electrode plate, and also facilitates improvement of electrolyte infiltration of the negative electrode plate, thereby improving the kinetic performance of the secondary battery.

In some embodiments, a ratio of a specific surface area of the negative electrode plate in a carbon dioxide atmosphere to a specific surface area of the negative electrode plate in a nitrogen atmosphere (BET_{CO2}/BET_{N2} for short) is greater than or equal to 5. Due to small molecular volume, carbon dioxide can be adsorbed in the porous carbon material and the pore of the negative electrode plate, and the measured specific surface area of the negative electrode plate is larger. The BET_{CO2}/BET_{N2} of the negative electrode plate is adjusted to be greater than or equal to 5 so that the negative electrode plate has more abundant pore structures and higher porosity, facilitating deposition of lithium metal in the pores, and thereby improving the energy density and cycle life of the secondary battery.

In some embodiments, in the negative electrode active material layer, a mass percentage of the porous carbon material is 90%-98%. The mass percentage of the porous carbon material falls within the above range so that the negative electrode plate has better electrochemical performance. Optionally, in the negative electrode active material layer, the mass percentage of the porous carbon material is 90%, 91%, 92%, 93%, 94%, 95%, 96%, 97%, or 98%. Further, in the negative electrode active material layer, the mass percentage of the porous carbon material is 93%-96%.

In some embodiments, the negative electrode active material layer further optionally includes a binder. The binder may be selected from at least one of styrenebutadiene rubber (SBR), polyacrylic acid (PAA), polyacrylic acid sodium (PAAS), polyacrylamide (PAM), polyvinyl alcohol (PVA), sodium alginate (SA), polymethacrylic acid (PMAA), and carboxymethyl chitosan (CMCS).

In some embodiments, the negative electrode active material layer further optionally includes a conductive agent. The conductive agent may be selected from at least one of superconducting carbon, acetylene black, carbon black, Ketjen black, carbon dots, carbon nanotubes, graphene, and carbon nanofibers.

In some embodiments, the negative electrode active material layer further optionally includes other promoters such as a thickener (for example, sodium carboxymethyl cellulose (CMC-Na)).

In some embodiments, a negative electrode current collector may be a metal foil current collector or a composite current collector. For example, copper foil may be used as the metal foil. The composite current collector may include a polymer material matrix and a metal layer formed on at least one surface of the polymer material matrix. The composite current collector may be formed by forming a metal material (copper, copper alloy, nickel, nickel alloy, titanium, titanium alloy, silver, silver alloy, or the like) on a polymer material matrix (for example, matrices of polypropylene (PP), polyethylene terephthalate (PET), polybutylene terephthalate (PBT), polystyrene (PS), and polyethylene (PE)).

In some embodiments, the current collector of the negative electrode plate is copper foil, the copper foil containing at least one element for lithiation. Introduction of the element for lithiation can improve a lithiation capability of the current collector. Specifically, the element for lithiation is an element that can react with lithium ions so that the lithium ions are deposited. In some embodiments, the element for lithiation may be doped in the copper foil to form copper alloy; or the element for lithiation may alternatively be in a form of element, oxide, nitride, or the like to form a coating on a surface of the copper foil.

In some embodiments, a mass percentage of the element for lithiation in the copper foil is greater than or equal to 5%. Optionally, the mass percentage of the element for lithiation in the copper foil is 5%, 6%, 7%, 8%, 9%, or 10%.

In some embodiments, the element for lithiation includes at least one of silver, zinc, magnesium, aluminum, tin, and silicon. The element for lithiation can form lithium alloy with lithium so as to implement lithiation.

In some embodiments, thickness of the copper foil is 4 µm-20 µm. Optionally, the thickness of the copper foil is 4 µm, 5 µm, 6 µm, 8 µm, 10 µm, 12 µm, 15 µm, 16 µm, 18 µm, or 20 µm.

In some embodiments, the negative electrode plate may be prepared in the following manner: the constituents used for preparing the negative electrode plate, for example, the porous carbon material, the conductive agent, the binder, and any other constituent, are dispersed in a solvent (for example, deionized water) to form a negative electrode slurry; and the negative electrode slurry is applied onto the negative electrode current collector, followed by processes such as drying and cold pressing to obtain the negative electrode plate.

In some embodiments, a method for preparing the negative electrode plate includes the following steps:
pretreating the porous carbon material so that the porous carbon material adsorbs gas;
preparing a negative electrode slurry from the porous carbon material with the gas adsorbed; and
preparing the negative electrode active material layer by using the negative electrode slurry on at least one surface of the current collector, the gas being desorbed from the porous carbon material to form the pore.

The porous carbon material is pretreated so that the porous carbon material adsorbs gas, and in the step of preparing the negative electrode active material layer by applying the negative electrode slurry, especially in processes such as drying and cold pressing, the gas adsorbed in the porous carbon material can be desorbed from the porous carbon material to form the pore structure of the negative electrode active material layer.

### Positive electrode plate

The positive electrode plate includes a positive electrode current collector and a positive electrode active material layer disposed on at least one surface of the positive electrode current collector.

For example, the positive electrode current collector includes two opposite surfaces in its thickness direction, and the positive electrode active material layer is disposed on either or both of the two opposite surfaces of the positive electrode current collector.

In some embodiments, the positive electrode current collector may be a metal foil current collector or a composite current collector. For example, aluminum foil may be used as the metal foil. The composite current collector may include a polymer material matrix and a metal layer formed on at least one surface of the polymer material matrix. The composite current collector may be formed by forming a metal material (aluminum, aluminum alloy, nickel, nickel alloy, titanium, titanium alloy, silver, silver alloy, or the like) on a polymer material matrix (for example, matrices of polypropylene (PP), polyethylene terephthalate (PET), polybutylene terephthalate (PBT), polystyrene (PS), and polyethylene (PE)).

In some embodiments, the positive electrode active material may be a positive electrode active material for batteries well known in the art. For example, the positive electrode active material may include at least one of the following materials: olivine-structured lithium-containing phosphate, lithium transition metal oxide, and respective modified compounds thereof. However, this application is not limited to these materials, but may use other conventional materials that can be used as positive electrode active materials for batteries instead. One of these positive electrode active materials may be used alone, or two or more of them may be used in combination. Examples of the lithium transition metal oxide may include but are not limited to at least one of lithium cobalt oxide (for example, LiCoO₂), lithium nickel oxide (for example, LiNiO₂), lithium manganese oxide (for example, LiMnO₂ and LiMn₂O₄), lithium nickel cobalt oxide, lithium manganese cobalt oxide, lithium nickel manganese oxide, lithium nickel cobalt manganese oxide (for example, LiNi_{1/3}Co_{1/3}Mn_{1/3}O₂ (NCM333 for short), LiNi_{0.5}Co_{0.2}Mn_{0.3}O₂ (NCM523 for short), LiNi_{0.5}Co_{0.25}Mn_{0.25}O₂ (NCM211 for short), LiNi_{0.6}Co_{0.2}Mn_{0.2}O₂ (NCM622 for short), and LiNi_{0.8}Co_{0.1}Mn_{0.1}O₂ (NCM811 for short)), lithium nickel cobalt aluminum oxide (for example, LiNi_{0.85}Co_{0.15}Al_{0.05}O₂), and modified compounds thereof. Examples of the olivine-structured lithium-containing phosphate may include but are not limited to at least one of lithium iron phosphate (for example, LiFePO₄ (LFP for short)), a composite material of lithium iron phosphate and carbon, lithium manganese phosphate (for example, LiMnPO₄), a composite material of lithium manganese phosphate and carbon, lithium manganese iron phosphate, and a composite material of lithium manganese iron phosphate and carbon.

In some embodiments, the positive electrode active material layer further optionally includes a binder. For example, the binder may include at least one of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluorine-containing acrylic resin.

In some embodiments, the positive electrode active material layer further optionally includes a conductive agent. For example, the conductive agent may include at least one of superconducting carbon, acetylene black, carbon black, Ketjen black, carbon dots, carbon nanotubes, graphene, and carbon nanofibers.

In some embodiments, the positive electrode plate may be prepared in the following manner: the foregoing constituents used for preparing the positive electrode plate, for example, the positive electrode active material, the conductive agent, the binder, and any other constituent, are dispersed in a solvent (for example, N-methylpyrrolidone) to form a positive electrode slurry; and the positive electrode slurry is applied onto the positive electrode current collector, followed by processes such as drying and cold pressing to obtain the positive electrode plate.

### Electrolyte

The electrolyte conducts ions between the positive electrode plate and the negative electrode plate. The electrolyte is not limited to any specific type in this application and may be selected as required. For example, the electrolyte may be in a liquid state, a gel state, or an all-solid state.

In some embodiments, the electrolyte is a liquid electrolyte. The liquid electrolyte includes an electrolytic salt and a solvent.

In some embodiments, the electrolytic salt may be selected from at least one of lithium hexafluorophosphate, lithium tetrafluoroborate, lithium perchlorate, lithium hexafluoroborate, lithium bis(fluorosulfonyl)imide, lithium bistrifluoromethanesulfon imide, lithium trifluoromethanesulfonate, lithium difluorophosphate, lithium difluoro(oxalato)borate, lithium bisoxalatoborate, lithium difluorobisoxalate phosphate, and lithium tetrafluoro oxalato phosphate.

In some embodiments, the solvent may be selected from at least one of ethylene carbonate, propylene carbonate, ethyl methyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, methyl sulfonyl methane, ethyl methanesulfonate, and diethyl sulfone.

In some embodiments, the liquid electrolyte further optionally includes an additive. For example, the additive may include a negative electrode film-forming additive, a positive electrode film-forming additive, or may further include an additive capable of improving some performance of a battery, for example, an additive for improving over-charge performance of the battery, and an additive for improving high-temperature performance or low-temperature performance of the battery.

### Separator

In some embodiments, the secondary battery further includes a separator. The separator is not particularly limited in type in this application, and may be any commonly known porous separator with high chemical stability and mechanical stability.

In some embodiments, a material of the separator may be selected from at least one of glass fiber, non-woven fabric, polyethylene, polypropylene, and polyvinylidene fluoride. The separator may be a single-layer film or a multi-layer composite film, and is not particularly limited. When the separator is a multi-layer composite film, all layers may be made of same or different materials, which is not particularly limited.

In some embodiments, the positive electrode plate, the negative electrode plate, and the separator may be made into an electrode assembly through winding or lamination.

In some embodiments, the secondary battery may include an outer package. The outer package may be used for packaging the electrode assembly and the electrolyte.

In some embodiments, the outer package of the secondary battery may be a hard shell, for example, a hard plastic shell, an aluminum shell, or a steel shell. The outer package of the secondary battery may alternatively be a soft pack, for example, a soft pouch. A material of the soft pack may be plastic. Plastic examples are polypropylene, polybutylene terephthalate, and polybutylene succinate.

This application does not impose special limitations on the shape of the secondary battery, which may be cylindrical, rectangular, or of any other shapes. For example, FIG. 2 shows a rectangular secondary battery 5 as an example.

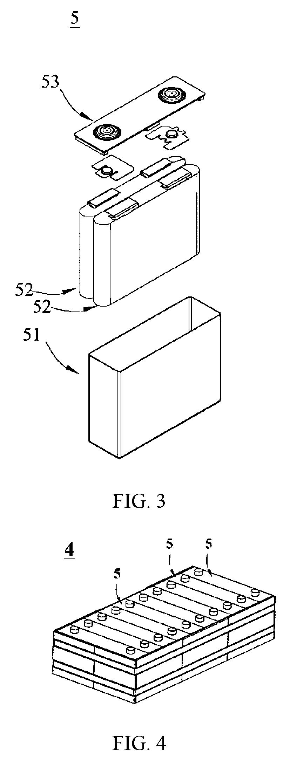

In some embodiments, referring to FIG. 3, the outer package may include a housing 51 and a cover plate 53. The housing 51 may include a base plate and side plates connected to the base plate, where the base plate and the side plates enclose an accommodating cavity. The housing 51 has an opening communicating with the accommodating cavity, and the cover plate 53 can cover the opening to seal the accommodating cavity. The positive electrode plate, the negative electrode plate, and the separator may be made into an electrode assembly 52 through winding or lamination. The electrode assembly 52 is packaged in the accommodating cavity. The electrolyte infiltrates the electrode assembly 52. There may be one or more electrode assemblies 52 in the secondary battery 5, and persons skilled in the art may make choices according to actual requirements.

In some embodiments, the secondary battery may be used to assemble a battery module, and the battery module may include one or more secondary batteries. The specific quantity may be adjusted based on use and capacity of the battery module.

FIG. 4 shows a battery module 4 as an example. Referring to FIG. 4, in the battery module 4, a plurality of secondary batteries 5 may be sequentially arranged along a length direction of the battery module 4. Certainly, the batteries may alternatively be arranged in any other manners. Further, the plurality of secondary batteries 5 may be fastened by fasteners.

Optionally, the battery module 4 may further include a housing with an accommodating space, and the plurality of secondary batteries 5 are accommodated in the accommodating space.

In some embodiments, the battery module may be further assembled into a battery pack, and the battery pack may include one or more battery modules. The specific quantity may be chosen by persons skilled in the art based on use and capacity of the battery pack.

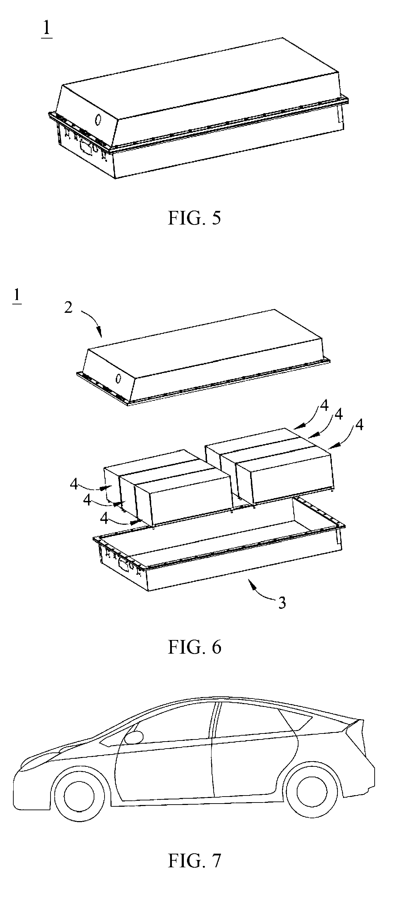

FIG. 5 and FIG. 6 show a battery pack 1 as an example. Referring to FIG. 5 and FIG. 6, the battery pack 1 may include a battery box and a plurality of battery modules 4 arranged in the battery box. The battery box includes an upper box body 2 and a lower box body 3. The upper box body 2 can cover the lower box body 3 to form an enclosed space for accommodating the battery modules 4. The plurality of battery modules 4 may be arranged in the battery box in any manner.

In addition, this application further provides an electric apparatus. The electric apparatus includes at least one of the secondary battery, the battery module, or the battery pack provided in this application. The secondary battery, the battery module, or the battery pack may be used as a power source for the electric apparatus or an energy storage unit of the electric apparatus. The electric apparatus may include a mobile device (for example, a mobile phone or a notebook computer), an electric vehicle (for example, a battery electric vehicle, a hybrid electric vehicle, a plug-in hybrid electric vehicle, an electric bicycle, an electric scooter, an electric golf vehicle, or an electric truck), an electric train, a ship, a satellite system, an energy storage system, or the like, but is not limited thereto.

For the electric apparatus, a secondary battery, a battery module, or a battery pack may be selected according to requirements for using the electric apparatus.

FIG. 7 shows an electric apparatus as an example. This electric apparatus is a battery electric vehicle, a hybrid electric vehicle, a plug-in hybrid electric vehicle, or the like. To satisfy requirements of the electric apparatus for high power and high energy density of the secondary battery, a battery pack or a battery module may be used.

In another example, the apparatus may be a mobile phone, a tablet computer, a notebook computer, or the like. Such apparatus is generally required to be light and thin and may use a secondary battery as its power source.

### Examples

The following describes examples of this application. The examples described below are illustrative and only used for explaining this application, and cannot be construed as limitations on this application. Examples whose technical solutions or conditions are not specified are made in accordance with technical solutions or conditions described in literature in the field or made in accordance with product instructions. The reagents or instruments used are all conventional products that are commercially available if no manufacturer is indicated.

### Example 1

A lithium-ion battery of this example was prepared according to the following steps.
(1) Preparation of positive electrode plate: A positive electrode active material LiNi_{0.8}Co_{0.1}Mn_{0.1}O₂, a conductive agent acetylene black, and a binder PVDF were mixed in NMP at a mass ratio of 96:2:2. The resulting slurry was applied onto aluminum foil, followed by drying, cold pressing, and cutting to obtain a positive electrode plate.
(2) Preparation of negative electrode plate: A porous carbon material hard carbon (Dᵥ50 = 4.6 µm), a conductive agent acetylene black, a binder SBR, and a dispersing agent CMC were dispersed in deionized water at a mass ratio of 95:1:2:2. The resulting slurry was applied onto copper foil containing 6 wt% of Ag, followed by drying, cold pressing, and cutting to obtain a negative electrode plate. In the processes of drying and cold pressing, gas adsorbed in the porous carbon material was desorbed from the porous carbon material to form a pore in the negative electrode active material layer. Specifically, in steps (1) and (2), the coating weight of the slurry was adjusted to reach a preset CB value according to a CB value designed for lithium-ion batteries.
(3) Preparation of lithium-ion battery: The positive electrode plate, a separator polyethylene film, and the negative electrode plate were stacked in sequence to obtain a bare cell. The bare cell was placed in an outer package which was filled with an electrolyte of 1M LiPF₆/EC:EMC:DEC (with a volume ratio of 1:1:1) after drying, followed by processes such as vacuum packaging, standing, formation, and shaping to obtain a lithium-ion battery.

### Example 2

A lithium-ion battery of this example differed from the lithium-ion battery of example 1 in a type of a porous carbon material and a CB value of the lithium-ion battery. Dᵥ50 of the porous carbon material was 4.6 µm. Specifically, coating weights of a positive electrode slurry and a negative electrode slurry were adjusted to reach a preset CB value according to a CB value designed for lithium-ion batteries.

### Example 3

A lithium-ion battery of this example differed from the lithium-ion battery of example 1 in the type of porous carbon material and a CB value of the lithium-ion battery. Dᵥ50 of the porous carbon material was 4.6 µm.

### Example 4

A lithium-ion battery of this example differed from the lithium-ion battery of example 1 in that a type of a porous carbon material was different. Dᵥ50 of the porous carbon material was 4.6 µm.

### Examples 5 to 8

Lithium-ion batteries of examples 5 to 8 differed from the lithium-ion battery of example 1 in CB values of the lithium-ion batteries.

### Examples 9 to 11

Lithium-ion batteries of examples 9 to 11 differed from the lithium-ion battery of example 1 in oil absorption values and specific surface areas of porous carbon materials.

For compositions of the lithium-ion batteries of examples 1 to 11, refer to Table 1.

Table 1 shows compositions of lithium-ion batteries of examples 1 to 11, where BET_{CO2}/BET_{N2} represents a ratio of a specific surface area of the negative electrode plate in a carbon dioxide atmosphere to a specific surface area of the negative electrode plate in a nitrogen atmosphere, and CB represents a ratio of a reversible lithiation capacity of the negative electrode plate to a reversible delithiation capacity of the positive electrode plate.

**Table 1 Compositions of lithium-ion batteries of examples 1 to 11**

| Example | Porous carbon material | | | BET_{CO2}/BET_{N2} | CB |
|---|---|---|---|---|---|
| | Type | Oil absorption value (mL/100g) | Specific surface area (m²/g) | | |
| Example 1 | Hard carbon | 52 | 78.5 | 7.3 | 0.4 |
| Example 2 | Activated carbon | 48 | 90.2 | 9.2 | 0.6 |
| Example 3 | Carbon fibers | 38 | 175.7 | 14.5 | 0.8 |
| Example 4 | Carbon aerogel | 79 | 138.4 | 10.7 | 0.4 |
| Example 5 | Hard carbon | 52 | 78.5 | 7.3 | 0.1 |
| Example 6 | Hard carbon | 52 | 78.5 | 7.3 | 0.6 |
| Example 7 | Hard carbon | 52 | 78.5 | 7.3 | 0.8 |
| Example 8 | Hard carbon | 52 | 78.5 | 7.3 | 1.0 |
| Example 9 | Hard carbon | 59 | 125.6 | 9.7 | 0.4 |
| Example 10 | Hard carbon | 66 | 394.0 | 16.3 | 0.4 |
| Example 11 | Hard carbon | 75 | 968.7 | 28.5 | 0.4 |

### Example 12

A lithium-ion battery of this example differed from the lithium-ion battery of example 1 in that a mass ratio of a porous carbon material, a conductive agent acetylene black, a binder SBR, and a dispersing agent CMC in a negative electrode plate was 90:4:3:3, and that BET_{CO2}/BET_{N2} of the negative electrode plate was 5.9.

### Example 13

A lithium-ion battery of this example differed from the lithium-ion battery of example 1 in that a mass ratio of a porous carbon material, a conductive agent acetylene black, a binder SBR, and a dispersing agent CMC in a negative electrode plate was 98:0.2:1:0.8, and that BET_{CO2}/BET_{N2} of the negative electrode plate was 7.4.

### Comparative example 1

A lithium-ion battery of comparative example 1 differed from the lithium-ion battery of example 1 in that a negative electrode plate was copper foil.

### Comparative example 2

A lithium-ion battery of comparative example 2 differed from the lithium-ion battery of example 1 in that a CB value was 1.1.

### Tests

### Specific surface area test

Specific surface areas of the porous carbon material and the negative electrode plate were obtained through calculation using the multi-point Brunauer-Emmett-Teller method after nitrogen/carbon dioxide isothermal adsorption and desorption curves of the materials were measured with an automatic gas adsorption analyzer.

### Oil absorption value test

The oil absorption value was determined using the Gardner-Coleman method, where the solvent used was dibutyl phthalate.

### Negative electrode plate surface SEM test

The surface of the negative electrode plate was photographed using a scanning electron microscope, so that distribution and pore diameters of pores in the surface of a negative active substance layer could be observed.

### Negative electrode plate section SEM test

The negative electrode plate was cut in a direction perpendicular to the negative active substance layer. A cut section was photographed using a scanning electron microscope so as to observe distribution of pores in the negative active substance layer, where distance between two end openings of the pore in a direction perpendicular to the negative electrode active substance layer was y, and length between the two end openings of the pore along an inner wall of the pore was L.

### Energy density test

At room temperature, the lithium-ion battery was charged to an upper limit voltage at a rate of 1/3C, and then discharged to a lower limit voltage at a rate of 1/3C, so as to obtain energy of the lithium-ion battery during discharge. Energy density of lithium-ion battery (Wh/kg) = energy of lithium-ion battery during discharge/mass of lithium-ion battery.

### Cycling performance test

At room temperature, the lithium-ion battery was charged to an upper limit voltage at a rate of 1/3C and charged to 0.05C at a constant voltage, left standing for 10 min, and then discharged to a lower limit voltage at 1/3C and left standing for 10min. The above charge and discharge process was repeated, and ratios of discharge capacities of cycles to a discharge capacity of the first cycle were recorded. Until a value of the ratio was less than or equal to 80%, the number of cycles was recorded.

Electrochemical performance test results of lithium-ion batteries of examples 1 to 13 and comparative examples 1 and 2 were recorded in Table 2.

**Table 2 Electrochemical performance test results of lithium-ion batteries of examples 1 to 13 and comparative examples 1 and 2**

| Example | Energy density (Wh/kg) | Cycles |
|---|---|---|
| Example 1 | 423.5 | 527 |
| Example 2 | 399.2 | 589 |
| Example 3 | 375.7 | 802 |
| Example 4 | 430.9 | 413 |
| Example 5 | 465.1 | 357 |
| Example 6 | 403.7 | 613 |
| Example 7 | 379.2 | 852 |
| Example 8 | 354.1 | 1260 |
| Example 9 | 426.4 | 592 |
| Example 10 | 422.8 | 531 |
| Example 11 | 419.3 | 507 |
| Example 12 | 401.6 | 488 |
| Example 13 | 422.1 | 462 |
| Comparative example 1 | 352.2 | 18 |
| Comparative example 2 | 312.5 | 229 |

It can be learned from relevant data in Table 2 that the negative electrode plate of the secondary battery of comparative example 1 was copper foil. After charge, lithium metal was deposited on the surface of the negative electrode plate to form a lithium metal negative electrode, and the energy density of the secondary battery of comparative example 1 was 352.2 Wh/kg, while the number of cycles was just 18, featuring poor cycling performance. Compared with the secondary battery of comparative example 1, the secondary batteries of examples 1 to 13 included the porous carbon material in the negative electrode plate and had pores in the negative electrode active material layer. The secondary batteries of examples 1 to 13 had energy densities of 354.1 Wh/kg-465.1 Wh/kg and the numbers of cycles of 357-1260, significantly better than the secondary battery of example 1 in terms of energy density and cycling performance. The secondary battery of comparative example 2 had a structure close to that of example 1, but the CB value was 1.1, and no lithium metal was deposited on the negative electrode plate after charge, thus the energy density of the secondary battery of comparative example 2 was low, at 312.5 Wh/kg, and the number of cycles was 229. As compared with comparative examples 1 and 2, the secondary batteries of examples 1 to 13 had significantly improved energy density and cycling performance, featuring better overall performance.

Examples 5 to 8 differed from each other in CB values. It can be learned from relevant data in Table 2 that within the range of 0 < CB ≤ 1, an increase in the CB value leads to a decrease in the energy density but an increase in the number of cycles of the secondary battery. This is because the increase in the CB value leads to a decrease in lithium metal deposited on the negative electrode plate after charge and a decrease in the energy density; and the lithium metal deposited on the negative electrode plate is an important factor affecting the cycling performance of the secondary battery, and a decrease in lithium metal leads to an improvement in the cycling performance. Controlling the CB value within a range of 0.4-1.0 can achieve better overall performance.

Examples 1, 12, and 13 differed from each other in percentages of the porous carbon material in the negative electrode active material layer. As compared with examples 12 and 13, the secondary battery of example 1, in which the mass percentage of the porous carbon material in the negative electrode active material layer was 95%, had higher energy density and number of cycles than examples 12 and 13.

Technical features in the foregoing embodiments may be combined in any way. For brevity of description, possible combinations of the technical features in the foregoing embodiments are not described all. However, as long as there is no contradiction among combinations of these technical features, all the combinations should be considered within a scope recorded in this specification.

The foregoing embodiments only represent several implementations of this application, and descriptions thereof are specific and detailed, but should not be construed as any limitations on the scope of this patent. It should be noted that persons of ordinary skill in the art may further make several modifications and improvements without departing from the concept of this application, and these modifications and improvements also fall within the protection scope of this application. Therefore, the protection scope of this application should be subject to the appended claims.

## Claims

1. A secondary battery, **characterized by** comprising a negative electrode plate, wherein
a negative electrode active material layer of the negative electrode plate comprises a porous carbon material; the negative electrode active material layer has a pore, the pore running through or not through the negative electrode active material layer; and lithium metal is present in the pore.

2. The secondary battery according to claim 1, **characterized in that** the secondary battery further comprises a positive electrode plate; and a ratio of a reversible lithiation capacity of the negative electrode plate to a reversible delithiation capacity of the positive electrode plate is CB, wherein 0 < CB ≤ 1, and
optionally, 0.4 ≤ CB ≤ 1.

3. The secondary battery according to claim 1 or 2, **characterized in that** thickness of the negative electrode active material layer is x, and distance between two end openings of the pore in a direction perpendicular to the negative electrode active material layer is y, wherein x and y satisfy the following condition: 0.1x ≤ y ≤ x.

4. The secondary battery according to any one of claims 1 to 3, **characterized in that** length between two end openings of the pore along an inner wall of the pore is L, wherein L and y satisfy the following condition: L > y.

5. The secondary battery according to any one of claims 1 to 4, **characterized in that** the pore is a non-linear pore.

6. The secondary battery according to any one of claims 1 to 5, **characterized in that** a projection of interior of the pore on the current collector in the direction perpendicular to the negative electrode active material layer does not overlap with two end openings of the pore.

7. The secondary battery according to any one of claims 1 to 6, **characterized in that** the pore is provided in plurality, and distance between adjacent two of the pores is d, wherein d ≤ 10x.

8. The secondary battery according to any one of claims 1 to 7, **characterized in that** a maximum diameter of the pore is 1 µm-50 µm.

9. The secondary battery according to any one of claims 1 to 8, **characterized in that** the porous carbon material is selected from at least one of hard carbon, biomass carbon, activated carbon, carbon fibers, and carbon aerogel.

10. The secondary battery according to any one of claims 1 to 9, **characterized in that** Dᵥ50 of the porous carbon material is 1 µm-100 µm.

11. The secondary battery according to any one of claims 1 to 10, **characterized in that** a specific surface area of the porous carbon material in a carbon dioxide atmosphere is greater than or equal to 50 m²/g.

12. The secondary battery according to any one of claims 1 to 11, **characterized in that** an oil absorption value of the porous carbon material is greater than or equal to 30 mL/100g, wherein the oil absorption value is determined using the Gardner-Coleman method.

13. The secondary battery according to any one of claims 1 to 12, **characterized in that** a ratio of a specific surface area of the negative electrode plate in a carbon dioxide atmosphere to a specific surface area of the negative electrode plate in a nitrogen atmosphere is greater than or equal to 5.

14. The secondary battery according to any one of claims 1 to 13, **characterized in that** in the negative electrode active material layer, a mass percentage of the porous carbon material is 90%-98%.

15. The secondary battery according to any one of claims 1 to 14, **characterized in that** a current collector of the negative electrode plate is copper foil, the copper foil containing at least one element for lithiation.

16. The secondary battery according to claim 15, **characterized in that** a mass percentage of the element for lithiation in the copper foil is greater than or equal to 5%.

17. The secondary battery according to claim 15 or 16, **characterized in that** the element for lithiation comprises at least one of silver, zinc, magnesium, aluminum, tin, and silicon.

18. The secondary battery according to any one of claims 15 to 17, **characterized in that** thickness of the copper foil is 4 µm-20 µm.

19. The secondary battery according to any one of claims 1 to 18, **characterized in that** a method for preparing the negative electrode plate comprises the following steps:
pretreating the porous carbon material so that the porous carbon material adsorbs gas;
preparing a negative electrode slurry from the porous carbon material with the gas adsorbed; and
preparing the negative electrode active material layer by using the negative electrode slurry on at least one surface of the current collector, the gas being desorbed from the porous carbon material to form the pore.

20. Abattery module, **characterized by** comprising the secondary battery according to any one of claims 1 to 19.

21. A battery pack, **characterized by** comprising the battery module according to claim 20.

22. An electric apparatus, **characterized by** comprising at least one of the secondary battery according to any one of claims 1 to 19, the battery module according to claim 20, and the battery pack according to claim 21.
